# EUROPÄISCHE PATENTSCHRIFT

(11) **EP 1 646 558 B1**
(45) Veröffentlichungstag und Bekanntmachung des Hinweises auf die Patenterteilung: **15.11.2006**
(21) Anmeldenummer: 04763270.8
(22) Anmeldetag: 15.07.2004
(51) Int. Cl.: B64C 1/20, B64C 1/22, B64C 1/00, B64D 9/00

(54) **FRACHTRAUMBODEN FÜR EIN FLUGZEUG UND VERFAHREN ZU DESSEN MONTAGE**
FLOOR FOR AN AIRCRAFT CARGO COMPARTMENT AND A METHOD FOR THE ASSEMBLY THEREOF
PLANCHER DE COMPARTIMENT A FRET D'UN AERONEF ET SON PROCEDE DE MONTAGE

(30) Priorität: 18.07.2003 DE 10332798; 27.08.2003 DE 10339507; 27.08.2003 DE 10339508; 08.03.2004 DE 102004011163; 08.03.2004 DE 102004011164
(43) Veröffentlichungstag der Anmeldung: 19.04.2006
(60) Teilanmeldung: 06016930.7
(73) Patentinhaber: Telair International GmbH, 83714 Miesbach (DE)
(72) Erfinder: HUBER, Thomas, 83727 Schliersee (DE); PATZLSPERGER, Andreas, 83666 Waakirchen (DE); HOLZNER, Richard, 83026 Rosenheim (DE)
(74) Vertreter: Bohnenberger, Johannes
(86) Internationale Anmeldenummer: PCT/EP2004/007922
(87) Internationale Veröffentlichungsnummer: WO 2005/012085

(56) Entgegenhaltungen:
- DE-A- 2 162 042
- DE-U- 20 122 116
- US-A- 3 381 921
- US-A- 3 612 316

## Beschreibung

Die Erfindung hetrifft einen Frachtraumboden für ein Flugzeug sowie ein Verfahren zu dessen Montage.

Aus der DE 196 27 846 A1 (US 5,927,650), der DE 197 20 224 A1 (US 6,125,984), der EP 0 649 802 A1, der US 4,807,735, der US 3,612,316 oder der DE 2 162 042, welches als nächstliegender Stand der Technik betrachtet wird, sind Frachtraumböden für den Frachtraum eines Flugzeugs bekannt, bei denen Paneele oder dgl. flächige Bodenelemente zum Befestigen von Rollenelementen, Kugelelementen, Riegelelementen, PDUs oder dgl. Funktionselementen vorgesehen sind, die auf einem flachen Boden eines Flugzeugs oder auf Floorbeams oder dgl. Stützelementen zum Abstützen der Bodenelemente montiert sind, wobei die Stützelemente mit einem Körper oder einer Haut des Flugzeugs verbunden sind. Die bekannten Frachtraumböden werden dabei derart montiert, dass zunächst der Körper oder die Haut des Flugzeugs, also der Rumpf mitsamt den Stützelementen aufgebaut und danach die Bodenelemente an den Stützelementen im Flugzeug-Frachtraum montiert werden. Abschließend werden die Funktionselemente eingebaut und die Leitungsverbindungen (Steuerleitungen, Hydraulikleitungen, Entwässerungsleitungen oder dgl.) angebracht. Der Arbeitsaufwand ist hoch, bzw. die Montagearbeiten sind sehr umständlich, zumal sie in der Enge des Frachtraumes vorgenommen werden müssen. Auf Grund dieser komplizierten Vorgehensweise und der eingeschränkten Arbeits- und Handhabungsmöglichkeiten können darüber hinaus leicht Fehler auftreten.

Der Erfindung liegt die Aufgabe zu Grunde, einen Frachtraumboden (Anspruch 1) sowie ein Verfahren (Anspruch 22) zu dessen Montage aufzuzeigen, wodurch eine Arbeitserleichterung und Verringerung von Fehlermöglichkeiten bei der Montage sichergestellt wird.

Diese Aufgabe wird durch einen Frachtraumboden für einen Frachtraum eines Flugzeugs gelöst, umfassend Paneele oder dgl. flächige Bodenelemente zum Befestigen von Rollenelementen, Kugelelementen, Riegelelementen, PDUs oder dgl. Funktionselementen, Floorbeams oder dgl. Stützelemente zum Abstützen der Bodenelemente an und zum Verbinden mit einem Körper oder einer Haut des Flugzeugs, wobei die Bodenelemente mit den Stützelementen als vorgefertigte Bodenmodule fest verbunden und die Bodenmodule in das Flugzeug einbaubar sind.

Verfahrensmäßig wird die Aufgabe durch ein Verfahren zur Montage eines Frachtraumbodens für einen Frachtraum eines Flugzeugs gelöst, umfassend die Schritte:
- Befestigen von Paneelen oder dgl. flächigen Bodenelementen zum Befestigen von Rollenelementen, Kugelelementen, Riegelelementen, PDUs oder dgl. Funktionselementen an Floorbeams oder dgl. Stützelementen zum Abstützen der Bodenelemente an und zum Verbinden mit einem Körper oder einer Haut des Flugzeugs derart, dass die Paneele mit den Stützelementen vorgefertigte und einheitlich handhabbare Bodenmodule bilden,
- Einheben eines Bodenmoduls in den Frachtraum und
- Befestigen der Stützelemente am Körper oder der Haut des Flugzeugs.

Ein wesentlicher Punkt der Erfindung liegt somit darin, dass die Stützelemente, insbesondere Floorbeams nunmehr nicht mehr als Teile des Flugzeugrumpfes betrachtet werden, an denen die Bodenelemente innerhalb des Flugzeugs befestigt werden. Vielmehr werden die Stützelemente bzw. Floorbeams als Elemente des Frachtraumbodens betrachtet, die zusammen mit den Bodenelementen Bodenmodule bilden und die dann insgesamt in vorgefertigtem Zustand in das Flugzeug bzw. in den Frachtraum einbaubar sind. Auf diese Weise wird die Montage nicht nur sehr viel einfacher, es können vielmehr die Bodenmodule außerhalb des beengenden Frachtraums gut zugänglich aufgestellt und bis zur gewünschten Aufbaustufe montiert werden, so dass sich Fehler vermeiden und in vielen Fällen sogar vollständig andere (z. B. automatisierte und von Robotern durchgeführte) Montagemethoden verwenden lassen, die innerhalb des Frachtraums nicht anwendbar wären. Es sind auch Stellen unterhalb der Bodenelemente zugänglich, die bei den in konventioneller Weise aufgebauten Frachtraumböden bzw. in konventionellen Montagemethoden gar nicht zugänglich waren.

Vorzugsweise werden die Funktionselemente am Bodenelement der Bodenmodule montiert, so dass eine nachträgliche Montage innerhalb des Frachtraums nicht mehr notwendig wird. Insbesondere werden elektrische und/oder mechanische Steuereinrichtungen, z. B. Daten-Bus-Einrichtungen zum Ansteuern der Funktionselemente, insbesondere der PDUs vorgesehen und mit den Funktionselementen verbunden, was außerhalb des Frachtraums deshalb besonders einfach geschehen kann, weil eine Zugänglichkeit von unten jederzeit gewährleistet ist.

Es sind vorzugsweise Übergabestecker oder dgl. Übergabeverbindungseinrichtungen vorgesehen und derart an den Bodenmodulen angebracht, dass sie mit korrespondierend geformten Übergabeverbindungseinrichtungen eines benachbarten Bodenmoduls verbindbar sind. Es stellt somit jedes Bodenmodul eine in sich geschlossene Funktionseinheit dar, die nach dem Einheben in den Frachtraum mit dem dort schon vorgesehenen Bodenmodul verbindbar bzw. an dieses ankoppelbar ist.

Vorzugsweise sind Abschnitte von Kabelkanälen, Hydraulikleitungen, Wasserleitungen, Stromleitungen oder dgl. Leitungseinrichtungen in den Bodenmodulen derart vorgesehen, dass sie mit gleichartigen Leitungseinrichtungen benachbarter Bodenmodule Gesamt-Leitungssysteme bilden, wenn die Bodenmodule im Flugzeug montiert sind. Auf diese Weise bilden die Bodenmodule gleichzeitig auch Abschnitte der Leitungseinrichtungen, wobei Abzweige zur Verbindung mit vorbestimmten Stellen der Paneele und/oder der Funktionselemente vorgesehen sind, wenn dies gewünscht ist. Dadurch wird der Aufbau von Leitungssystemen innerhalb des Flugzeugs erheblich erleichtert. Insgesamt sollen also die Bodenmodule nicht nur die komplette Verkabelung und Drainage usw. für die Organe des Frachtladesystems beinhalten sondern sollen vorzugsweise auch das komplette "Ducting" für das gesamte Flugzeug, z.B. die Klimaanlage oder andere Verkabelungen, welche in diesem Bereich des Flugzeugs normalerweise nur durchgeführt werden, aufweisen. Damit wird eine erhebliche effizientere Arbeitsweise beim Aufbau des gesamten Flugzeugs erreicht.

Vorzugsweise sind Montageelemente an den Bodenelementen zum mechanisch festen Verbinden von benachbarten Bodenelementen bei oder nach der Montage im Flugzeug vorgesehen. Es ist auf diese Weise möglich, die Bodenelemente zu einer festen, stabilen und steifen Fläche zu verbinden, welche dem gesamten Flugzeug erhöhte Stabilität verleiht und den Frachtraumboden erheblich verstärkt.

Vorzugsweise sind in den Bodenelementen Inspektions- oder Montageöffnungen vorgesehen, über welche ein Bilgenraum unter den Bodenelementen zugänglich ist. Zum Verschließen dieser Öffnungen sind Bodenelementabschnitte vorgesehen. Auf diese Weise ist es möglich, auch nachträglich innerhalb des Bilgenraums Montagearbeiten durchzuführen. Die Bodenelementabschnitte zum Verschließen der Öffnungen sind vorzugsweise mittels Schnellverschlusseinrichtungen an den Bodenelementen befestigt, so dass das Öffnen sehr leicht und schnell erfolgen kann.

Die Bodenelemente umfassen vorzugsweise Dichtungseinrichtungen zum Abdichten eines Raumes oberhalb der Bodenelemente gegenüber einem Raum (bzw. dem Bilgenraum) unterhalb der Bodenelemente. Dieses Abdichten geschieht zum Einen gegenüber Flüssigkeiten, z. B. Wasser, das mit eingeladenen Containern in den Frachtraum eingetragen wird, zum Anderen gegenüber Gasen, wie sie zum Löschen von Feuer verwendet werden, so dass der Frachtraum (ggf. auch der Bilgenraum) zum Ersticken von Feuer mit einem inerten Gas gefüllt werden kann. Diese Dichteinrichtungen sind besonders einfach (z. B. in Form einer aufgespritzten Schicht) anzubringen, da die Bodenmodule ja außerhalb des Frachtraums montiert und darum von unten zugänglich sind.

Vorzugsweise werden Dicht-Verbindungselemente zum dichten Verbinden der Bodenelementen mit benachbarten Bodenelementen und/oder der Haut des Flugzeugs vorgesehen. Diese Dichtelemente sind insbesondere so aufgebaut, dass nach dem Einbau eines Bodenmoduls das Bodenelement dieses Moduls mit dem benachbarten Bodenelement sowie mit dem Frachtraum abdichtet und eine gesonderte, nachträgliche Abdichtung entfallen kann.

Vorzugsweise sind Entwässerungseinrichtungen zum Abführen von Flüssigkeiten aus dem Frachtraum (das wie oben beschrieben eingetragene Wasser) und zum Überleiten der Flüssigkeit in entsprechende Entwässerungseinrichtungen benachbarter Bodenmodule vorgesehen, so dass ein gesondertes Anbringen von Leitungen zum Ableiten des Wassers nicht notwendig ist.

Vorzugsweise umfassen die Bodenmodule weiterhin Floorpanels oder dgl. begehbare Flächen, so dass jedes Bodenmodul einen kompletten Frachtraumbodenabschnitt bildet.

Die Bodenmodule sind weiterhin mit Isolierungseinrichtungen zum Isolieren einer unteren Rumpfhalbschale versehen. Dadurch muss man die (immer notwendige) Isolierung nicht nachträglich anbringen, man kann sie vielmehr außerhalb des Flugzeugs an den Modulen montieren. Diese Isolierungseinrichtungen können entweder unter den Bodenelementen angebracht werden, was insbesondere außerhalb des Flugzeugs sehr einfach zu bewerkstelligen ist, oder aber (ggf. auch zusätzlich) im Bereich der Stützelemente, nahe der Haut angebracht werden, wenn dies erwünscht wird. Es sind somit Arbeiten im engen, unter dem Frachtraumboden liegenden Bereich des Flugzeugs nicht notwendig.

Die Bodenmodule umfassen auch solche, welche Bulkheads oder dgl. Trennwände aufweisen oder aber Befestigungseinrichtungen zum Befestigen von Trennwänden, wie sie in bestimmten Frachtraum-Abschnitten üblicherweise nachträglich montiert werden. Die erfindungsgemäße Ausbildung der Bodenmodule ist jedoch sehr viel einfacher zu montieren. Die Trennwände bestehen vorzugsweise mindestens teilweise aus ballistisch widerstandsfähigem Material, so dass eine höhere Sicherheit gewährleistet ist.

Die Bodenmodule können weiterhin EE-Racks und dgl. Montageeinrichtungen für Elektronikbauteile bzw. Befestigungseinrichtungen für diese umfassen. Dies hat wieder den Vorteil, dass ein sehr einfacher Aufbau außerhalb des Flugzeugs kostensparend und effizient möglich ist.

Die Bodenmodule umfassen weiterhin Wassertanks und/oder Abwassertanks bzw. Befestigungseinrichtungen für diese Tanks sowie Anschlusseinrichtungen hierfür, so dass die Bodenmodule gleichzeitig "Wasserversorgungsmodule" darstellen. Gegebenenfalls können auch Zusatztanks für Kraftstoff samt den notwendigen Leitungsanschlüssen an den Bodenmodulen vorgesehen sein, wobei insbesondere austauschbare Einheiten hier von großem Vorteil sind, um Flugzeuge je nach Bedarf mit größeren oder kleineren Zusatztanks (oder ohne Zusatztanks) ausrüsten zu können.

Die Bodenmodule sind weiterhin mit den Wandverkleidungen und/oder Deckenverkleidungen oder dgl. Verkleidungselementen oder Montageeinrichtungen hierfür versehen, um den Frachtraum auszukleiden. Es stellen somit die Bodenmodule dann kompakte "Zellen" dar, aus denen der Frachtraum aufgebaut ist und die in den Flugzeugrumpf eingeschoben werden können.

Die Bodenmodule sind vorzugsweise derart ausgebildet und an der Haut des Flugzeugs befestigt, dass sie nach dem Einbau in das Flugzeug in beliebiger Reihenfolge wieder ausbaubar sind. Dadurch ergibt sich eine erhebliche Erleichterung bei der Wartung bzw. Reparatur des Frachtraumbodens.

Zur Montage eines Frachtraumbodens für den Frachtraum eines Flugzeugs werden folgende Schritte durchgeführt:

Zunächst werden die flächigen Bodenelemente mit den Stützelementen fest verbunden. Danach werden die so entstandenen Bodenmodule in den Frachtraum hineingehoben. Schließlich werden die Stützelemente am Körper oder der Haut des Flugzeugs befestigt. Die Funktionselemente werden vorzugsweise an den Bodenelementen vor dem Einheben in den Frachtraum befestigt, was erheblich leichter geschehen kann, als bei Montage innerhalb des Flugzeugs.

Nach dem Einheben der Bodenmodule werden die Steuereinrichtungen zum Ansteuern der Funktionselemente, Kabelkanäle, Hydraulikleitungen, Wasserleitungen, Stromleitungen oder dgl. Leitungseinrichtungen sowie ggf. vorgesehenen Entwässerungseinrichtungen zum Abführen von Flüssigkeiten aus dem Frachtraum mit den entsprechenden Gegenstücken (Steuereinrichtungen, Leitungseinrichtungen usw.) eines benachbarten, schon im Frachtraum befestigten Bodenmoduls verbunden. Durch diese Vorgehensweise sind auch Teil-Überprüfungen des "wachsenden" Gesamtsystems möglich, was die Lokalisierung eventueller Fehler erheblich erleichtert. Insbesondere finden mindestens Teile der genannten Verbindungsschritte vor dem Befestigen der Stützelemente am Körper oder der Haut des Flugzeugs statt, so dass beim Auftreten von Fehlern während des Verbindens oder beim Feststellen von Fehlern innerhalb eines Moduls dieses wieder aus dem Frachtraum herausgehoben und durch ein anderes, korrekt gefertigtes Modul ersetzt werden kann.

Bevorzugte Ausführungsformen ergeben sich aus den Unteransprüchen sowie der nachfolgenden Beschreibung eines Ausführungsbeispiels der Erfindung, das an Hand von Abbildungen näher erläutert wird. Hierbei zeigen
- Fig. 1: eine perspektivische Teildarstellung mit einem Bodenmodul vor der Montage,
- Fig. 2: eine Darstellung ähnlich der nach Fig. 1 jedoch mit eingebautem Bodenmodul,
- Fig. 3: eine perspektivische Schemadarstellung eines Bodenmoduls von unten,
- Fig. 4: eine perspektivische Teildarstellung eines Details eines Bodenelements,
- Fig. 5: eine weitere Ausführungsform eines Bodenmoduls mit Trennwand und begehbarer Fläche,
- Fig. 6: eine Ausführungsform eines Bodenmoduls mit Tank und EE-Rack, und
- Fig. 7: eine Ausführung eines Bodenmoduls mit Wand- und Deckenverkleidung.

In der nachfolgenden Beschreibung werden für gleiche und gleich wirkende Teile dieselben Bezugsziffern gewählt.

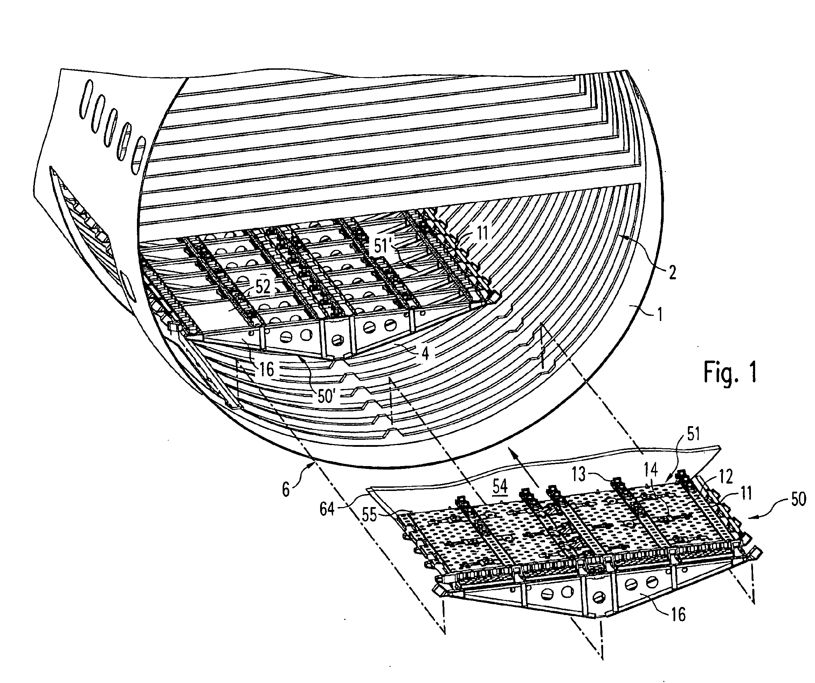

Gemäß Fig. 1 schließt ein Körper bzw. eine (Außen-) Haut 1 eines Flugzeugs in seiner unteren Rumpfhalbschale 6 einen Frachtraum 2 ein, in welchem Bodenelemente 51 einen Frachtraumboden bilden, unter dem sich ein Bilgenraum 4 befindet. Die Bodenelemente 51 sind an Stützelementen, sog. Floorbeams 16 befestigt, die wiederum an der Haut 1 des Flugzeugs befestigt sind.

Auf bzw. an den Bodenelementen 51 sind begehbare Flächen, sog. Floorpanels sowie Funktionselemente für die Beförderung und das Verzurren von Ladung angebracht, nämlich Rollenelemente 11, Kugelelemente 12, Riegelelemente 13, und Rollenantriebseinheiten, sog. PDUs 14, wie dies aus den eingangs genannten Druckschriften bekannt ist.

Die Bodenelemente 51 werden zur Herstellung des Frachtraumbodens außerhalb des Flugzeugs an den Floorbeams 16 derart befestigt, dass sich Bodenmodule 50 ergeben, die entweder einen Teil der Breite, vorzugsweise aber die gesamte Breite des endgültigen Frachtraumbodens aufweisen.

An den Bodenmodulen 50 werden auch die im Frachtraum notwendigen Trennwände 54 montiert, wobei hierfür vorgesehene Befestigungseinrichtungen 55 auch so ausgebildet sein können, dass die Montage der Trennwand innerhalb des Flugzeugs erfolgen kann bzw. eine Demontage von Trennwänden 54 möglich ist. Die Trennwände 54 sind, wie in Figur 1 angedeutet, mit Dichteinrichtungen 64 derart versehen, dass nach dem Einbau die Trennwände 54 so weit gasdicht im Frachtraum 2 sitzen, dass dessen Befüllung mit Halon zu Feuerlöschzwecken ermöglicht wird.

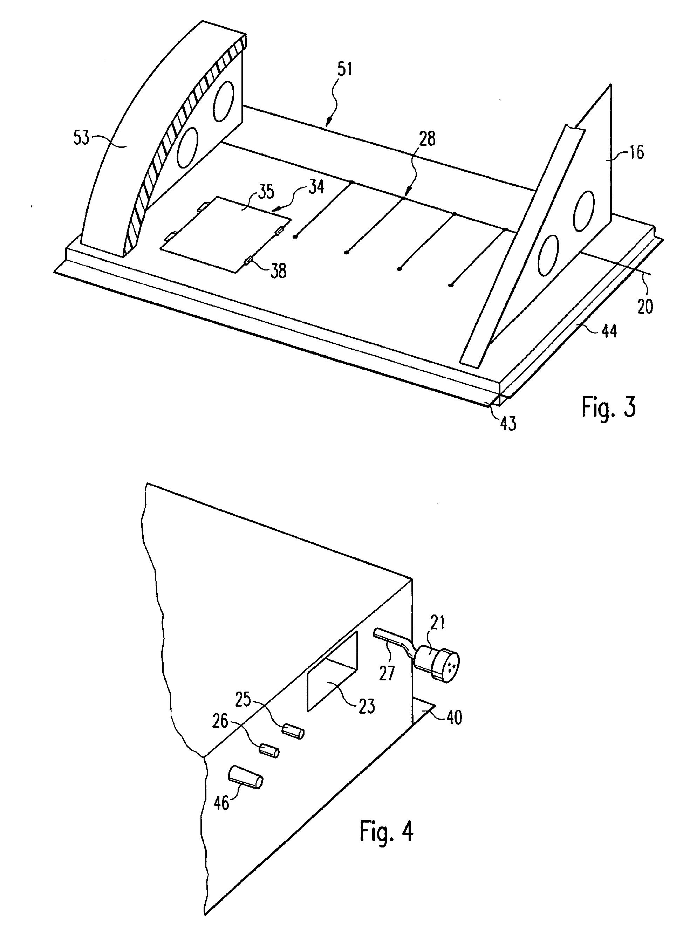

Wie aus Fig. 3 ersichtlich sind die Bodenelemente 51, die an den Floorbeams 16 (bzw. umgekehrt) befestigt sind, bei dieser Montage außerhalb des Flugzeugs mit Steuereinrichtungen 20 versehen, welche über Abzweige 28 mit den an einem Bodenelement 51 montierten Funktionselementen, insbesondere PDUs 14 verbunden sind, um diese in ihrer Funktion zu steuern.

Die Bodenelemente 51 weisen weiterhin Inspektionsöffnungen 34 auf, welche durch Bodenelementabschnitte, die Klappen 35 bilden, verschließbar sind. Zum Verschließen sind Schnellverschlüsse 38 vorgesehen.

Die Bodenelemente 51 sind weiterhin mit Dicht-Verbindungselementen 43 und 44, z. B. Dichtlippen aus Elastomer derart ausgestattet, dass einerseits eine Abdichtung gegenüber der Haut 1 des Flugzeugs (durch die Dicht-Verbindungselemente 43) und andererseits gegenüber nach dem Einbau benachbarten Bodenelementen 51' (siehe Fig. 1) gewährleistet wird.

Weiterhin sind - wie in Fig. 3 angedeutet - Isolierungen 53 derart an den Modulen 50 vorgesehen, dass sie relativ eng an der Außenhaut 1 anliegen, wenn die Module 50 montiert sind. Zusätzlich (oder alternativ) können entsprechende Isolierungseinrichtungen auch unter den Bodenelementen 51 montiert bzw. dort aufgespritzt sein, um eine thermische Isolierung des Frachtraums gegenüber der Außenhaut zu erreichen.

Wie aus Fig. 4 ersichtlich sind die Bodenelemente 51 bzw. die Bodenmodule 50 weiterhin mit Stromleitungen 27 versehen, welche mittels Übergabesteckern 21 mit entsprechenden Leitungen von benachbarten Bodenelementen 51' bzw. Bodenmodulen 50' verbindbar sind, so dass sich durchgehende Stränge bilden.

Weiterhin sind Kabelkanäle 23, Hydraulikleitungen 25, Wasserleitungen 26 und Stromleitungen 27 für verschiedene Zwecke vorgesehen, wie sie üblicherweise in Flugzeugen vorhanden sind. Auch hier sind vorzugsweise (nicht gezeigte) Übergabestecker oder dgl. Verbindungselemente vorgesehen, um diese Leitungen und Kanäle mit entsprechenden Leitungen und Kanälen benachbarter Bodenmodule 50' zu verbinden. Gleiches gilt auch für die an sich bekannten Entwässerungsleitungen 46, welche zum Abführen von Wasser dienen, das in den Frachtraum eindringt bzw. mit dem Frachtgut eingetragen wird. Es sei an dieser Stelle betont, dass die Leitungen, Kanäle und dgl. in den Modulen montierten Leitungen und Kanäle nicht nur die Funktionen der in dem Frachtraum eingebauten Elemente unterstützen, sondern dass diese Leitungen auch die gesamte "Infrastruktur" des Flugzeugs an sich umfassen können, die normalerweise in diesem Bereich des Flugzeugs untergebracht ist.

Die Bodenelemente 51 sind vorzugsweise an ihrer Unterseite über aufgespritzte Schichten, Folien oder dgl. Dichteinrichtungen 40 derart abgedichtet, dass eine vorzugsweise gasdichte Abdichtung zwischen der Oberseite und der Unterseite der Bodenelemente 51 entsteht, so dass Löschgas, welches in den Frachtraum 2 eingeleitet wird, nicht durch den Bilgenraum 4 entweichen kann. Die Bodenmodule 50 sind also im Wesentlichen vollständig vormontiert, wobei nach der Vormontage auch schon (noch außerhalb des Flugzeugs) Testläufe erfolgen können, um z. B. die korrekten Leitungsverbindungen und Funktionsfähigkeit der Funktionselemente, insbesondere der PDUs abschnittsweise testen zu können. Weiterhin ist es auch möglich, elektronische Steuerbaugruppen in die Module einzubauen, welche für die ansteuerbaren Funktionselemente, insbesondere für die PDUs, "zuständig" sind. Dies erleichtert den Aufbau und auch die Testläufe außerhalb des Frachtraumes.

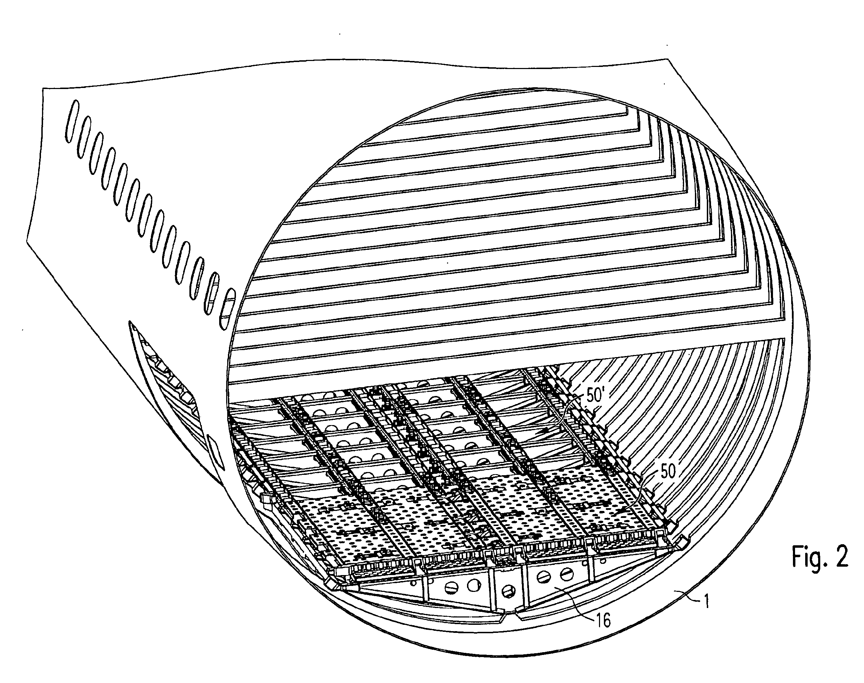

Die so vormontierten Bodenmodule 50 werden dann, wie in Fig. 2 gezeigt, in das Flugzeug eingesetzt und über die Floorbeams 16 mit dem Körper 1 des Flugzeugs verbunden. Dadurch ergibt sich Abschnitt nach Abschnitt der gesamte Frachtraumboden.

Selbstverständlich ist es auch möglich, in kleineren oder größeren Baueinheiten zu arbeiten, je nachdem, wie groß und handlich bzw. unhandlich die Einheiten sind. Vorzugsweise werden jedoch den Frachtraumboden in seiner Querrichtung vollständig bildende Module 50 vorgesehen, so dass die Floorbeams 16 nahtlos ausgebildet und damit mit höchster Stabilität fertigbar sind.

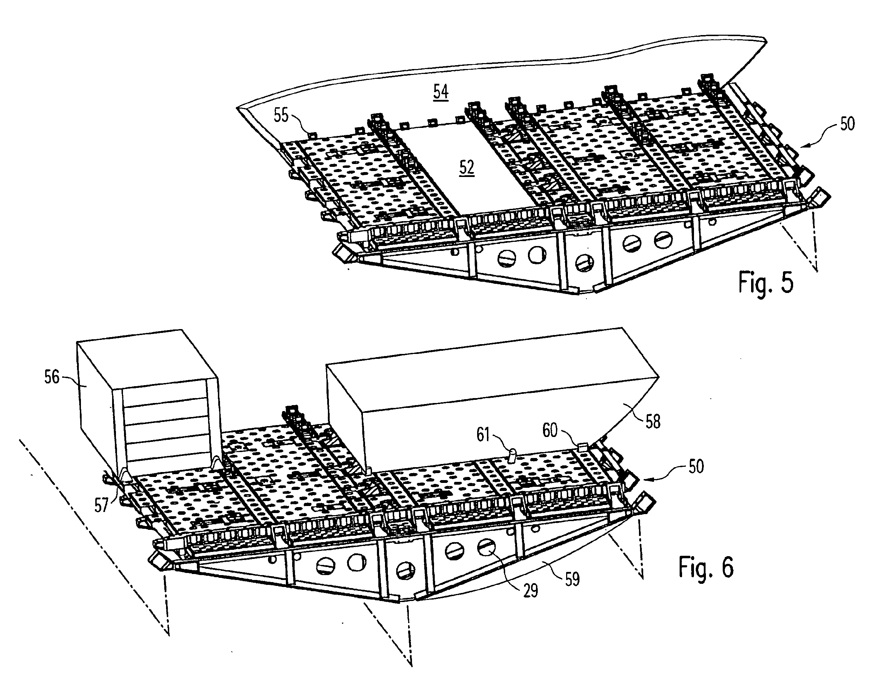

In Fig. 5 wird nochmals verdeutlicht, wie ein Bodenmodul im wesentlichen aussieht, an welchem eine Trennwand 54 befestigt ist. An diese Trennwand 54 angrenzend montiert sind bei der in Fig. 6 gezeigten Ausführungsform eines Bodenmoduls 50 ein EE-Rack 56, das über Befestigungseinrichtungen 57 angebracht ist, sowie ein Wassertank 58 mit seinen Befestigungseinrichtungen 60 sowie ein Abwassertank 59 mit Wasseranschluß 61. Das EE-Rack beinhaltet die in Flugzeugen im Frachtraum (hinter einer Trennwand) üblicherweise montierte Elektronik, wobei der große Vorteil der hier gezeigten Ausführungsform darin liegt, dass die Montage außerhalb des Flugzeugs am Bodenmodul sehr einfach ist und darum ein geringeres Fehlerrisiko besteht. Die Anschlüsse des EE-Racks bzw. der darin enthaltenen elektronischen Baugruppen können außerhalb des Flugzeugs montiert werden, wobei dann die oben beschriebenen Leitungen und Kanäle sowie Verbindungseinrichtungen zu Nachbarmodulen die elektronischen Baugruppen in das Gesamtsystem einfügen. Es sei an dieser Stelle darauf hingewiesen, dass dieses "Einfügen" in das Gesamtsystem selbstverständlich auch für den Wassertank 58 und den Abwassertank 59 gilt, wobei derartige Tanks auch Zusatztanks für Treibstoff sein können. Wesentlich ist hierbei, dass eine vereinfachte Montage gegebenenfalls mit einer dazugehörigen Trennwand 54 an einem einzigen Modul außerhalb des Flugzeugs möglich ist.

Die Bodenmodule bilden somit zum einen "Funktionsbaugruppen", welche besondere Ausstattungen für das Befördern und Verzurren von Fracht oder aber Elektronikbaugruppen (EE-Rack) oder Tanks umfassen. Andererseits bilden die Bodenmodule "Leitungsabschnitte", dienen also nur zum Durchleiten zum Beispiel von Klimaanlagen-Leitungen 29 (Fig. 6), welche in diesem Abschnitt des Frachtraums keinerlei gesonderte direkte Funktion erfüllen müssen.

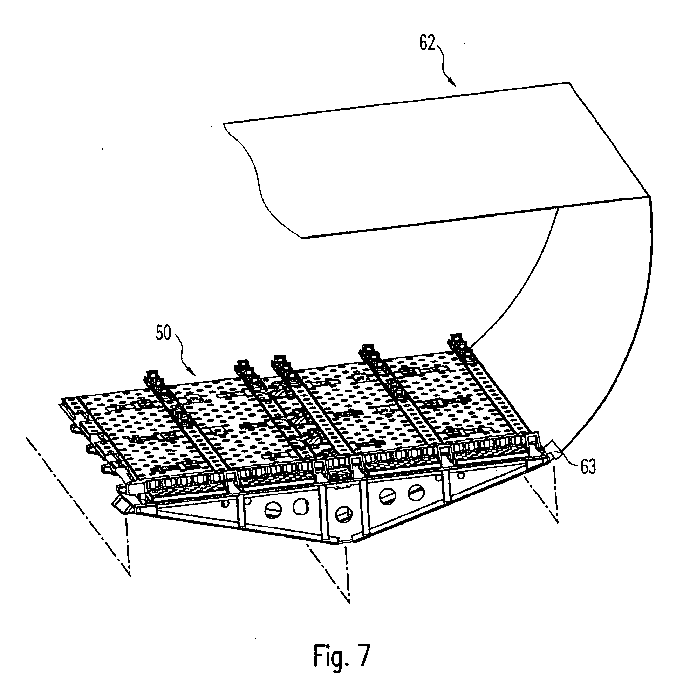

Des weiteren ist es auch möglich, wie in Fig. 7 gezeigt, Verkleidungselemente 62 über Montageeinrichtungen 63 an den Bodenmodulen 50 zu montieren, wobei vorzugsweise zusätzlich Führungsschienen oder dgl. Führungseinrichtungen an der Außenhaut des Flugzeugs im Frachtraum derart befestigt sind, dass die Bodenmodule in den Frachtraum samt den Verkleidungselementen eingefahren werden können.

Aus obigen geht hervor, dass ein wesentlicher Grundgedanke der Erfindung darin liegt, den Frachtraumboden mit seinen tragenden Strukturen und möglichst vielen sonstigen Funktionselementen und Abschnitten von Leitungen zusammenzufassen, die üblicherweise gesondert und nachträglich in das Flugzeug eingebaut werden. Ein derartiger modularer Aufbau erleichtert nicht nur die Gesamtmontage eines Flugzeugs, es wird vielmehr auch die Qualität erhöht. Darüber hinaus können verschiedene Konstruktionsmethoden und Werkstoffe verwendet werden, die man bei Montage im Inneren des Flugzeugrumpfes nicht anwenden könnte.

### Bezugszeichenliste

- 1: Körper/Haut
- 2: Frachtraum
- 4: Bilgenraum
- 6: unter Rumpfhalbschale
- 11: Rollenelement
- 12: Kugelelement
- 13: Riegelelement
- 14: PDU
- 16: Floorbeam
- 20: Steuereinrichtung
- 21: Übergabestecker
- 23: Kabelkanal
- 25: Hydraulikleitung
- 26: Wasserleitung
- 27: Stromleitung
- 28: Abzweig
- 29: Klimaleitung
- 30: Montageelement
- 34: Inspektionsöffnung
- 35: Bodenelementabschnitt/Klappe
- 38: Schnellverschluss
- 40: Dichteinrichtung
- 43: Dicht-Verbindungselement
- 44: Dicht-Verbindungselement
- 46: Entwässerung
- 50, 50': Bodenmodul
- 51, 51': Bodenelement
- 52: begehbare Fläche
- 53: Isolierung
- 54: Trennwand
- 55: Befestigungseinrichtung Trennwand
- 56: EE-Rack
- 57: Befestigungseinrichtung EE-Rack
- 58: Wassertank
- 59: Abwassertank
- 60: Befestigungseinrichtung für Tank
- 61: Wasseranschluß
- 62: Verkleidungselement
- 63: Montageeinrichtung
- 64: Dichtung Trennwand

## Patentansprüche

1. Frachtraumboden für einen Frachtraum (2) eines Flugzeugs, umfassend
Paneele oder dgl. flächige Bodenelemente (51, 51') zum Befestigen von Rollenelementen (11), Kugelelementen (12), Riegelelementen (13), PDUs (14) oder dgl. Funktionselementen,
Floorbeams (16) oder dgl. Stützelemente zum Abstützen der Bodenelemente (51, 51') an und zum Verbinden mit einem Körper oder einer Haut (1) des Flugzeugs,
**dadurch gekennzeichnet, dass**
die Bodenelemente (51, 51') mit den Stützelementen (16) als vorgefertigte Bodenmodule (50, 50') fest verbunden und die Bodenmodule (50, 50') in das Flugzeug einbaubar sind.

2. Frachtraumboden nach Anspruch 1,
**dadurch gekennzeichnet, dass**
die Funktionselemente (11-14) am Bodenelement (51, 51') der Bodenmodule (50, 50') montiert sind.

3. Frachtraumboden nach einem der vorhergehenden Ansprüchen, insbesondere nach Anspruch 2,
**dadurch gekennzeichnet, dass**
elektrische und/oder mechanische Steuereinrichtungen (20) zum Ansteuern der Funktionselemente, insbesondere der PDUs (14) vorgesehen und mit den Funktionselementen verbunden sind.

4. Frachtraumboden nach einem der vorhergehenden Ansprüche, insbesondere nach Anspruch 3,
**dadurch gekennzeichnet, dass**
Übergabestecker (21) oder dgl. Übergabeverbindungseinrichtungen vorgesehen und derart an den Bodenmodulen (50) angebracht sind, dass sie mit korrespondierend geformten Übergabeverbindungseinrichtungen eines benachbarten Bodenmoduls (50') verbindbar sind.

5. Frachtraumboden nach einem der vorhergehenden Ansprüche,
**dadurch gekennzeichnet, dass**
Abschnitte von Kabelkanälen (23), Hydraulikleitungen (25), Wasserleitungen (26), Stromleitungen (27) oder dgl. Leitungseinrichtungen in den Bodenmodulen (50) derart vorgesehen sind, dass sie mit gleichartigen Leitungseinrichtungen benachbarter Bodenmodule (50') Gesamtleitungssysteme bilden, wenn die Bodenmodule (50, 50') im Flugzeug montiert sind.

6. Frachtraumboden nach einem der vorhergehenden Ansprüche, insbesondere nach Anspruch 5,
**dadurch gekennzeichnet, dass**
die Leitungseinrichtungen (23, 25-27) Abzweige (28) zur Verbindung mit vorbestimmten Stellen der Bodenelemente (51) und/oder der Funktionselemente (11-14) aufweisen.

7. Frachtraumboden nach einem der vorhergehenden Ansprüche,
**gekennzeichnet durch**
Montageelemente (30) an den Bodenmodulen (50) oder Bodenelementen (51) zum mechanisch festen Verbinden von benachbarten Bodenmodulen (50') oder Bodenelementen (51') bei oder nach der Montage im Flugzeug.

8. Frachtraumboden nach einem der vorhergehenden Ansprüche,
**gekennzeichnet durch**
mittels Bodenelementabschnitten (35) verschließbare Inspektions- und/oder Montageöffnungen (34) in den Bodenelementen (51) zur Zugänglichmachung eines Bilgenraumes (4) unter den Bodenelementen (51).

9. Frachtraumboden nach einem der vorhergehenden Ansprüche, insbesondere nach Anspruch 8,
**dadurch gekennzeichnet, dass**
die Bodenelementabschnitte (35) mittels Schnellverschlusseinrichtungen (38) an den Bodenelemente (51) befestigbar sind.

10. Frachtraumboden nach einem der vorhergehenden Ansprüche,
**dadurch gekennzeichnet, dass**
die Bodenelemente (51) Dichteinrichtungen (40) umfassen zum Abdichten eines Raumes oberhalb gegenüber einem Raum unterhalb der Bodenelemente (51).

11. Frachtraumboden nach einem der vorhergehenden Ansprüche,
**gekennzeichnet durch**
Dicht-Verbindungselemente (43, 44) zum dichten Verbinden der Bodenelemente (51) mit benachbarten Bodenelementen (51') und/oder der Haut (1) des Flugzeugs.

12. Frachtraumboden nach einem der vorhergehenden Ansprüche,
**gekennzeichnet durch**
Entwässerungseinrichtungen (46) zum Abführen von Flüssigkeiten aus dem Frachtraum (2) und zum Überleiten der Flüssigkeit in entsprechende Entwässerungseinrichtungen benachbarter Bodenmodule (50').

13. Frachtraumboden nach einem der vorhergehenden Ansprüche,
**dadurch gekennzeichnet, dass**
die Bodenmodule (50) Floorpanels oder dgl. begehbare Flächen (52) umfassen.

14. Frachtraumboden nach einem der vorhergehenden Ansprüche,
**dadurch gekennzeichnet, dass**
die Bodenmodule (50) Isolierungseinrichtung (53) zum Isolieren einer unteren Rumpfhalbschale (6) umfassen.

15. Frachtraumboden nach einem der vorhergehenden Ansprüche, insbesondere nach Anspruch 14,
**dadurch gekennzeichnet, dass**
die Isolierungseinrichtung (53) unter den Bodenelementen (51) und/oder im Bereich der Stützelemente (16) nahe der Haut (1) angebracht sind.

16. Frachtraumboden nach einem der vorhergehenden Ansprüche,
**dadurch gekennzeichnet, dass**
die Bodenmodule (50) Bulkheads oder dgl. Trennwände (54) oder Befestigungseinrichtungen (55) zum Befestigen von Trennwänden (54) umfassen.

17. Frachtraumboden nach einem der vorhergehenden Ansprüche, insbesondere nach Anspruch 16,
**dadurch gekennzeichnet, dass**
die Trennwände (54) mindestens teilweise aus ballistisch widerstandsfähigem Material gefertigt sind.

18. Frachtraumboden nach einem der vorhergehenden Ansprüche,
**dadurch gekennzeichnet, dass**
die Bodenmodule (50) EE-Racks oder dgl. Montageeinrichtungen (56) für Elektronikbauteile und/oder Befestigungseinrichtungen (57) und Anschlusseinrichtungen für diese umfassen.

19. Frachtraumboden nach einem der vorhergehenden Ansprüche,
**dadurch gekennzeichnet, dass**
die Bodenmodule (50) Wassertanks (58) und/oder Abwassertanks (59) und/oder Befestigungseinrichtungen (60) und/oder Anschlusseinrichtungen (61) hierfür umfassen.

20. Frachtraumboden nach einem der vorhergehenden Ansprüche,
**dadurch gekennzeichnet, dass**
die Bodenmodule (50) Wandverkleidungen und/oder Deckenverkleidungen oder dgl. Verkleidungselemente (62) oder Montageeinrichtungen (63) hierfür umfassen, zum Auskleiden des Frachtraums (2).

21. Frachtraumboden nach einem der vorhergehenden Ansprüche,
**dadurch gekennzeichnet, dass**
die Bodenmodule (50) derart ausgebildet und an der Haut (1) des Flugzeugs befestigt sind, dass sie nach dem Einbau in das Flugzeug in beliebiger Reihenfolge wieder ausbaubar sind.

22. Verfahren zur Montage eines Frachtraumbodens für einen Frachtraum eines Flugzeugs umfassend die Schritte:
- Befestigen von Paneelen oder dgl. flächen Bodenelementen zum Befestigen von Rollenelementen, Kugelelementen, Riegelelementen, PDUs oder dgl. Funktionselementen an Floorbeams oder dgl. Stützelementen zum Abstützen der Bodenelemente an und zum Verbinden mit einem Körper oder einer Haut des Flugzeugs derart, dass die Bodenelemente mit den Stützelementen vorgefertigte und einheitlich handhabbare Bodenmodule bilden;
- Einheben eines Bodenmoduls in den Frachtraum;
- Befestigen der Stützelemente am Körper oder der Haut des Flugzeugs;
- Wiederholen der obigen Schritte, bis der Frachtraumboden fertiggestellt ist.

23. Verfahren nach Anspruch 22, **gekennzeichnet durch** den Schritt:
Montage der Funktionselemente am Bodenelement vor dem Einheben in den Frachtraum.

24. Verfahren nach einem der Ansprüche 22 oder 23,
**gekennzeichnet durch**
einen nach dem Einheben erfolgenden Verbindungsschritt
- von Steuereinrichtungen zum Ansteuern der Funktionselemente,
- von Kabelkanälen, Hydraulikleitungen, Wasserleitungen, Stromleitungen oder dgl. Leitungseinrichtungen;
- von Entwässerungseinrichtungen zum Abführen von Flüssigkeiten aus dem Frachtraum,
mit entsprechenden Steuereinrichtungen, Leitungseinrichtungen und Entwässerungseinrichtungen eines benachbarten, im Frachtraum befestigten Bodenmoduls.

25. Verfahren nach einem der Ansprüche 22-24, insbesondere nach Anspruch 24,
**dadurch gekennzeichnet, dass**
mindestens Teile des Verbindungsschrittes vor dem endgültigen Befestigen der Stützelemente am Körper oder der Haut des Flugzeugs erfolgen.

## Claims

1. Cargo compartment floor for a cargo compartment (2) of an aircraft, comprising
panels or similar flat floor elements (51, 51') for fastening roller elements (11), ball elements (12), locking bar elements (13), PDUs (14) or similar functional elements,
floor beams (16) or similar support elements for supporting the floor elements (51, 51') at and for connecting them to a body or a skin (1) of the aircraft,
**characterised in that**
the floor elements (51, 51') are firmly connected to the support elements (16) as prefabricated floor modules (50, 50'), and the floor modules (50, 50') can be installed in the aircraft.

2. Cargo compartment floor according to Claim 1,
**characterised in that**
the functional elements (11-14) are assembled at the floor element (51, 51') of the floor modules (50, 50').

3. Cargo compartment floor according to either of the preceding Claims, in particular according to Claim 2,
**characterised in that**
electrical and/or mechanical control devices (20) are provided to control the functional elements, in particular the PDUs (14), and are connected to the functional elements.

4. Cargo compartment floor according to any one of the preceding Claims, in particular according to Claim 3,
**characterised in that**
interface plugs (21) or similar interface connection devices are provided and fitted to the floor
modules (50) such that they can be connected to correspondingly formed interface connection devices of an adjacent floor module (50').

5. Cargo compartment floor according to any one of the preceding Claims,
**characterised in that**
sections of cable ducts (23), hydraulic lines (25), water supply lines (26), power supply lines (27) or similar line devices are provided in the floor modules (50) such that, with like line devices of adjacent floor modules (50'), they form overall line systems when the floor modules (50, 50') are assembled in the aircraft.

6. Cargo compartment floor according to any one of the preceding Claims, in particular according to Claim 5,
**characterised in that**
the line devices (23, 25-27) comprise branches (28) for connection to predetermined points of the floor elements (51) and/or the functional elements (11-14).

7. Cargo compartment floor according to any one of the preceding Claims,
**characterised by**
assembly elements (30) at the floor modules (50) or floor elements (51) for the mechanically firm connection of adjacent floor modules (50') or floor elements (51') during or after assembly in the aircraft.

8. Cargo compartment floor according to any one of the preceding Claims,
**characterised by**
inspection and/or assembly openings (34), which can be closed by means of floor element sections (35), in the floor elements (51) for providing access to a bilge compartment (4) below the floor elements (51).

9. Cargo compartment floor according to any one of the preceding Claims, in particular according to Claim 8,
**characterised in that**
the floor element sections (35) can be fastened to the floor elements (51) by means of quick-acting closures (38).

10. Cargo compartment floor according to any one of the preceding Claims,
**characterised in that**
the floor elements (51) comprise sealing devices (40) for sealing a space above with respect to a space below the floor elements (51).

11. Cargo compartment floor according to any one of the preceding Claims,
**characterised by**
tight connection elements (43, 44) for tightly connecting the floor elements (51) to adjacent floor elements (51') and/or the skin (1) of the aircraft.

12. Cargo compartment floor according to any one of the preceding Claims,
**characterised by**
drainage devices (46) for carrying off liquids out of the cargo compartment (2) and for transferring the liquid into corresponding drainage devices of adjacent floor modules (50').

13. Cargo compartment floor according to any one of the preceding Claims,
**characterised in that**
the floor modules (50) comprise floor panels or similar passable surfaces (52).

14. Cargo compartment floor according to any one of the preceding Claims,
**characterised in that**
the floor modules (50) comprise an isolating device (53) for isolating a bottom fuselage semimonocoque (6).

15. Cargo compartment floor according to any one of the preceding Claims, in particular according to Claim 14,
**characterised in that**
the isolating device (53) is fitted below the floor elements (51) and/or in the region of the support elements (16) near the skin (1).

16. Cargo compartment floor according to any one of the preceding Claims,
**characterised in that**
the floor modules (50) comprise bulkheads or similar dividing walls (54) or fastening devices (55) for fastening dividing walls (54).

17. Cargo compartment floor according to any one of the preceding Claims, in particular according to Claim 16,
**characterised in that**
the dividing walls (54) are made at least in part of ballistically resistant material.

18. Cargo compartment floor according to any one of the preceding Claims,
**characterised in that**
the floor modules (50) comprise EE racks or similar assembly devices (56) for electronic components and/or fastening devices (57) and connection devices for these.

19. Cargo compartment floor according to any one of the preceding Claims,
**characterised in that**
the floor modules (50) comprise water tanks (58) and/or waste water tanks (59) and/or fastening devices (60) and/or connection devices (61) for these.

20. Cargo compartment floor according to any one of the preceding Claims,
**characterised in that**
the floor modules (50) comprise wall coverings and/or top coverings or similar covering elements (62) or assembly devices (63) for these in order to line the cargo compartment (2).

21. Cargo compartment floor according to any one of the preceding Claims,
**characterised in that**
the floor modules (50) are formed and fastened to the skin (1) of the aircraft such that they can be removed again in any desired order after being installed in the aircraft.

22. Method for assembling a cargo compartment floor for a cargo compartment of an aircraft comprising the steps:
- fastening panels or similar flat floor elements for fastening roller elements, ball elements, locking bar elements, PDUs or similar functional elements to floor beams or similar support elements for supporting the floor elements at and for connecting them to a body or a skin of the aircraft such that the floor elements, with the support elements, form prefabricated floor modules which can be handled in a standard manner;
- placing a floor module in the cargo compartment;
- fastening the support elements to the body or the skin of the aircraft;
- repeating the above steps until the cargo compartment floor is completed.

23. Method according to Claim 22, **characterised by** the step:
assembling the functional elements at the floor element before placement in the cargo compartment.

24. Method according to either of Claims 22 and 23,
**characterised by**
a connection step following placement for connecting
- control devices for controlling the functional elements,
- cable ducts, hydraulic lines, water supply lines, power supply lines or similar line devices;
- drainage devices for carrying off liquids out of the cargo compartment,
to corresponding control devices, line devices and drainage devices of an adjacent floor module fastened in the cargo compartment.

25. Method according to any one of Claims 22-24, in particular according to Claim 24,
**characterised in that**
at least parts of the connection step take place before the support elements are finally fastened to the body or the skin of the aircraft.

## Revendications

1. Fond de soute destiné à une soute (2) d'un avion, comportant :
des panneaux ou des éléments de fond (51, 51') plans similaires, en vue de fixer des éléments cylindriques (11), sphériques (12), des traverses (13), des blocs d'entraînement PDU (14) ou des éléments fonctionnels similaires,
des traverses de support de plancher (16) ou des éléments de support similaires servant à soutenir les éléments de fond (51, 51') sur un corps ou la carène (1) de l'avion en les reliant à celui-ci ou celle-ci, **caractérisé en ce que** les éléments de fond (51, 51') sont reliés de manière fixe avec les éléments de support (16) sous la forme de modules de fond (50, 50') préfabriqués et les modules de fond (50, 50) peuvent être montés dans l'avion.

2. Fond de soute selon la revendication 1 **caractérisé en ce que** les éléments fonctionnels (11, 14) sont montés sur l'élément de fond (51, 51') des modules de fond (50, 50').

3. Fond de soute selon une des revendications précédentes, tout particulièrement selon la revendication 2 **caractérisé en ce que** des dispositifs de commande électriques et / ou mécaniques (20) servant à piloter les éléments fonctionnels, tout particulièrement les blocs d'entraînement PDU (14), sont prévus et sont reliés aux éléments fonctionnels.

4. Fond de soute selon une des revendications précédentes, tout particulièrement selon la revendication 3 **caractérisé en ce que** des fiches de transfert (21) ou des dispositifs de connexion et de transfert similaires sont prévus et montés sur les modules de fond (50) de manière à pouvoir être reliés aux dispositifs de transfert et de connexion de forme correspondante d'un module de fond (50') voisin.

5. Fond de soute selon une des revendications précédentes **caractérisé en ce que** des segments de passages de câbles (23), de conduites hydrauliques (25), de conduites d'eau (26), de conduites électriques (27) ou de dispositifs de conduites similaires sont prévus dans les modules de fond (50) de manière à former, avec les dispositifs destinés aux conduites similaires des modules de fond (50') voisins, des systèmes complets de conduites lorsque les modules de fond (50, 50') sont montés dans l'avion.

6. Fond de soute selon une des revendications précédentes, tout particulièrement selon la revendication 5 **caractérisé en ce que** les dispositifs de conduite (23, 25-27) présentent des dérivations (28) permettant la jonction avec des points prédéfinis des éléments de fond (51) et / ou des éléments fonctionnels (11-14).

7. Fond de soute selon une des revendications précédentes **caractérisé par** des éléments de montage (30) sur les modules de fond (50) ou les éléments de fond (51) permettant une jonction mécanique solide entre les modules de fond (50') ou éléments de fond (51') voisins pendant ou après le montage dans l'avion.

8. Fond de soute selon une des revendications précédentes **caractérisé par** des ouvertures de visite et / ou de montage (34) pouvant être fermées par des segments d'éléments de fond (35), situées dans les éléments de fond (51) et permettant d'accéder au fond de cale (4) sous les éléments de fond (51).

9. Fond de soute selon une des revendications précédentes, tout particulièrement selon la revendication 8 **caractérisé en ce que** les segments d'éléments de fond (35) peuvent être fixés aux éléments de fond (51) au moyen de dispositifs de fermeture rapide (38).

10. Fond de soute selon une des revendications précédentes **caractérisé en ce que** les éléments de fond (51) comprennent des dispositifs d'étanchéité (40) servant à rendre étanche un espace situé au-dessus d'un espace situé au-dessous des éléments de fond (51).

11. Fond de soute selon une des revendications précédentes **caractérisé par** des éléments de jonction et d'étanchéité (43, 44) permettant de relier de manière étanche les éléments de fond (51) avec les éléments de fond voisins (51') et / ou la carène (1) de l'avion.

12. Fond de soute selon une des revendications précédentes **caractérisé par** des dispositifs de purge (46) permettant d'évacuer les liquides de la soute (2) et de les véhiculer vers les dispositifs de purge correspondants des modules de fond voisins (50').

13. Fond de soute selon une des revendications précédentes **caractérisé en ce que** les modules de fond (50) comportent des panneaux de sol ou des surfaces similaires se prêtant à la circulation (52).

14. Fond de soute selon une des revendications précédentes **caractérisé en ce que** les modules de fond (50) présentent des dispositifs d'isolation (53) permettant d'isoler une demi-coque inférieure du fuselage (6).

15. Fond de soute selon une des revendications précédentes, tout particulièrement selon la revendication 14 **caractérisé en ce que** les dispositifs d'isolation (53) sont placés sous les éléments de fond (51) et / ou dans la zone des éléments de support (16) à proximité de la carène (1).

16. Fond de soute selon une des revendications précédentes **caractérisé en ce que** les modules de fond (50) comportent des cloisons « bulkhead » ou cloisons similaires (54) ou des dispositifs de fixation (55) permettant de fixer ces cloisons (54).

17. Fond de soute selon une des revendications précédentes, tout particulièrement selon la revendication 16 **caractérisé en ce que** les cloisons (54) sont réalisées au moins en partie dans des matériaux ayant une résistance balistique.

18. Fond de soute selon une des revendications précédentes **caractérisé en ce que** les modules de fond (50) comportent des « EE-racks » ou des dispositifs de montage similaires (56) pour des composants électroniques et / ou des systèmes de fixation (57) ainsi que des dispositifs de raccordement pour ceux-ci.

19. Fond de soute selon une des revendications précédentes **caractérisé en ce que** les modules de fond (50) comportent des réservoirs à eau (58) et / ou à eaux usées (59) et / ou des systèmes de fixation (60) et /ou des dispositifs de raccordement (61) pour ceux-ci.

20. Fond de soute selon une des revendications précédentes **caractérisé en ce que** les modules de fond (50) comportent des éléments d'habillage des cloisons et / ou des plafonds ou des éléments d'habillage similaires (62) ou des dispositifs de montage (63) servant à l'habillage de la soute (2).

21. Fond de soute selon une des revendications précédentes **caractérisé en ce que** les modules de fond (50) sont réalisés et fixés à la carène (1) de l'avion de manière à pouvoir être démontés dans n'importe quel ordre après avoir été montés dans l'avion.

22. Procédé de montage d'un fond de soute pour la soute d'un avion comportant les étapes suivantes :
- fixation de panneaux ou éléments de fond plans similaires permettant de fixer des éléments cylindriques, sphériques, des traverses, des blocs d'entraînement PDU ou d'autres éléments fonctionnels de même type, sur des traverses de support de plancher ou éléments de support similaires permettant de soutenir les éléments de fond et d'établir une jonction avec un corps ou la carène de l'avion de telle sorte que les éléments de fond joints aux éléments de support forment des modules de fond préfabriqués et pouvant être manipulés comme une unité ;
- hissage d'un module de fond dans la soute ;
- fixation des éléments de support sur le corps ou la carène de l'avion ;
- répétition des étapes ci-dessus jusqu'à ce que le fond de soute soit entièrement réalisé.

23. Procédé selon la revendication 22 **caractérisé par** l'étape suivante :
montage des éléments fonctionnels sur l'élément de fond avant son hissage dans la soute.

24. Procédé selon l'une des revendications 22 ou 23 **caractérisé par** une des étapes servant à la jonction, après le hissage,
- de dispositifs de commande servant à piloter les éléments fonctionnels,
- de passages de câbles, de conduites hydrauliques, de conduites d'eau, de conduites électriques ou dispositifs de conduites similaires ;
- de dispositifs de purge servant à l'évacuation des liquides hors de la soute,
avec les dispositifs de commande, conduite et purge correspondants d'un module de fond voisin fixé dans la soute.

25. Procédé selon une des revendications 22 - 24, tout particulièrement selon la revendication 24 **caractérisé en ce qu'**au moins certaines parties de l'étape de jonction sont réalisées avant la fixation définitive des éléments de support sur le corps ou la carène de l'avion.
